(19) **Europäisches Patentamt**
**European Patent Office**
**Office européen des brevets**

(11) **EP 3 645 904 B1**

(12) **FASCICULE DE BREVET EUROPEEN**

(45) Date de publication et mention
de la délivrance du brevet:
**07.07.2021 Bulletin 2021/27**

(51) Int Cl.:
**F16D 13/58** *(2006.01)*

(21) Numéro de dépôt: **18733801.7**

(22) Date de dépôt: **07.06.2018**

(86) Numéro de dépôt international:
**PCT/EP2018/065058**

(87) Numéro de publication internationale:
**WO 2019/001924 (03.01.2019 Gazette 2019/01)**

(54) **GAMME DE DIAPHRAGMES D'EMBRAYAGE ET PROCEDES DE RECONNAISSANCE ET DE SELECTION D'UN DIAPHRAGME D'EMBRAYAGE D'UNE TELLE GAMME**

KUPPLUNGSMEMBRANBEREICH UND VERFAHREN ZUR ERKENNUNG UND AUSWAHL EINER KUPPLUNGSMEMBRAN AUS EINEM SOLCHEN BEREICH

RANGE OF CLUTCH DIAPHRAGMS AND METHODS FOR RECOGNISING AND SELECTING A CLUTCH DIAPHRAGM FROM SUCH A RANGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2017 FR 1756189**

(43) Date de publication de la demande:
**06.05.2020 Bulletin 2020/19**

(73) Titulaire: **Valeo Embrayages**
**80009 Amiens Cedex 2 (FR)**

(72) Inventeurs:
• **MARECHAL, Olivier**
  **80009 Amiens (FR)**
• **SAPAN, Derya**
  **16240 Bursa (TR)**

(56) Documents cités:
**DE-A1-102009 045 980    FR-A1- 2 531 510**
**JP-U- S4 862 442          JP-U- S6 392 829**
**US-A- 4 126 216**

**Description**

**DOMAINE TECHNIQUE DE L'INVENTION**

L'invention se rapporte à une gamme de diaphragmes d'embrayage, comportant plusieurs types d'embrayage distincts, mais dont les géométries sont néanmoins assez proches.

**ETAT DE LA TECHNIQUE ANTERIEURE**

Un diaphragme d'embrayage est une pièce métallique élastiquement déformable, généralement obtenue par découpe et formage d'une tôle dans une ou plusieurs presses, généralement avec plusieurs étapes successives de découpe et de formage. Un diaphragme présente généralement une rondelle extérieure définissant un axe de référence, et des doigts faisant saillie depuis la rondelle extérieure radialement vers l'axe de référence, chacun des doigts présentant une extrémité libre située à distance de l'axe de référence. Le document US 4 126 216 A, par exemple, montre des diaphragmes d'embrayage dont les doigts ont des profils d'extrémité de types différents.

Dans un atelier de montage d'embrayages, on est amené à manipuler des diaphragmes d'embrayage dont les géométries sont assez proches, par exemple des diaphragmes dont le diamètre extérieur et le nombre de doigts sont identiques. En pratique, les diaphragmes d'embrayage sont stockés empilés en chandelles en attendant leur montage, une chandelle étant normalement constituée de diaphragmes d'un même type.

Pour distinguer les diaphragmes de types différents dans une même gamme, on a généralement recours à des marquages imprimés ou gravés sur la rondelle extérieure, que les opérateurs doivent lire pour vérifier que le diaphragme manipulé est effectivement du type souhaité. En pratique, des erreurs de plusieurs origines sont possibles. Tout d'abord, l'opérateur peut faire des erreurs de lecture. Il peut également arriver que tous les diaphragmes d'une même chandelle ne soient pas du même type, de sorte qu'une lecture correcte du diaphragme du haut de la chandelle ne soit pas suffisante pour garantir la conformité des diaphragmes suivants.

Par ailleurs, le marquage positionné sur la rondelle extérieure du diaphragme d'embrayage n'est plus visible après montage de l'embrayage, car il est recouvert par le couvercle d'embrayage. On ne peut donc faire de vérification a posteriori, et l'on ne peut pas non plus utiliser le marquage du diaphragme pour identifier l'embrayage dans son ensemble.

Enfin, le marquage par impression ou gravure impose une opération supplémentaire lors de la fabrication du diaphragme d'embrayage.

**EXPOSE DE L'INVENTION**

L'invention vise à remédier aux inconvénients de l'état de la technique et à proposer des moyens de reconnaissance d'un diaphragme d'embrayage.

Pour ce faire est proposé, selon un premier aspect de l'invention, une gamme de diaphragmes d'embrayage, chacun des diaphragmes d'embrayage de la gamme étant constitué d'une pièce métallique formant une rondelle extérieure définissant un axe de référence, et des doigts faisant saillie depuis la rondelle extérieure radialement vers l'axe de référence, chacun des doigts présentant une extrémité libre située à distance de l'axe de référence, l'extrémité libre de chacun des doigts ayant un profil d'extrémité d'un type donné parmi plusieurs types différents, chacun des types différant de chacun des autres types de manière reconnaissable depuis un point d'observation donné situé à l'infini sur l'axe de référence, caractérisée en ce que la gamme de diaphragmes d'embrayage comporte plusieurs modèles de diaphragmes d'embrayage, les diaphragmes d'embrayage d'un même modèle donné quelconque parmi les modèles étant identiques, et les diaphragmes d'embrayage d'un même modèle donné quelconque parmi les modèles se distinguant des diaphragmes d'embrayage des autres modèles par une séquence spécifique des profils d'extrémités des différents types, la séquence spécifique constituant un code identifiant du modèle donné.

Les différents profils constituent les signes ou « caractères » d'un langage de codage. En combinant les différents profils disponibles de différentes manières, on constitue des séquences de caractères uniques, chaque séquence ayant une longueur inférieure ou égale au nombre de doigts d'embrayage.

Suivant un mode de réalisation, les diaphragmes d'embrayage de la gamme de diaphragmes d'embrayage ont un contour extérieur identique. En pratique, le contour extérieur des rondelles de la gamme de diaphragmes est réalisé par un même outil de presse.

Suivant un mode de réalisation, le contour extérieur comporte au moins une singularité d'indexation angulaire visible depuis le point d'observation donné, les diaphragmes d'embrayage d'un même modèle parmi les modèles distincts différant des diaphragmes d'embrayage des autres modèles par une séquence spécifique des profils d'extrémité des différents types, par rapport à un référentiel défini par la singularité d'indexation angulaire. En combinant les possibilités offertes par les différents signes du langage de codage avec une indexation permettant d'identifier le début de la séquence de signe à lire, on multiplie les combinaisons possibles.

Suivant un mode de réalisation, la séquence spécifique des profils d'extrémité des différents types des diaphragmes d'embrayage d'un modèle donné quelconque parmi les différents modèles diffère de la séquence des profils d'extrémité des différents types des autres modèles indépendamment de l'orientation angulaire autour de l'axe de référence. On s'affranchit ainsi de la nécessité d'orienter angulairement le diaphragme pour lire et interpréter les signes. La lecture du code reste possible même si le contour extérieur du diaphragme n'est pas visible. En revanche, le nombre de combinaisons possibles différentes est plus faible, ce qui amènera le cas échéant à augmenter le nombre de types de doigts différents, si le nombre de modèles distincts à identifier dans la gamme de diaphragmes d'embrayage est élevé.

Suivant un mode de réalisation, les différents types incluent au moins trois types différents, et de préférence au moins quatre types différents. Le nombre de combinaisons possible augmente avec le nombre de caractères différents dans le langage de codage.

De préférence, les différents types incluent au plus six types différents, et de préférence au plus quatre types différents. En pratique, le nombre de profils différents qu'il est facile de distinguer est limité. En augmentant le nombre de profils différents, on augmente également le risque d'erreur dans la reconnaissance des profils.

Suivant un mode de réalisation, les diaphragmes d'embrayage de la gamme ont un nombre N identique de doigts.

Suivant un mode de réalisation, les diaphragmes d'embrayage de la gamme ont un diamètre intérieur de référence $D_I$ identique non nul, le diamètre intérieur de référence $D_I$ d'un diaphragme d'embrayage donné de la gamme étant le diamètre du plus grand cylindre aligné sur l'axe de référence du diaphragme d'embrayage donné et en contact avec l'extrémité libre d'au moins un des doigts du diaphragme d'embrayage donné. Ce diamètre intérieur peut correspondre notamment à un diamètre d'une butée tournante venant en appui contre les extrémités libres des doigts du diaphragme d'embrayage.

Suivant un mode de réalisation, les différents types de profil d'extrémité comportent au moins deux types, et de préférence au moins trois types de profil d'extrémité, et de préférence quatre types de profil d'extrémité parmi les types suivants :

- un type de profil d'extrémité long, formant un segment de droite ou de cercle, le segment étant situé à une distance de l'axe de référence égale à la moitié du diamètre intérieur de référence et ayant une longueur $L_1$ donnée telle que :

$$\frac{\pi . D_I}{2N} < L_1$$

et de préférence telle que :

$$\frac{\pi . D_I}{3N} < L_1$$

- un type de profil d'extrémité court, situé à une distance de l'axe de référence strictement supérieur à la moitié du diamètre intérieur de référence, de préférence avec une différence supérieure à 2 mm, de préférence avec une différence supérieure à 5 mm;

- un type de profil d'extrémité échancré latéralement en sens direct, comportant une première partie suivant un segment de droite ou de cercle, le segment ayant une longueur $L_{31}$ donnée et étant situé à une distance de l'axe de référence égale à la moitié du diamètre intérieur de référence, et une deuxième partie située à une distance de l'axe de référence strictement supérieur à la moitié du diamètre intérieur de référence, de préférence avec une différence supérieure à 2 mm, la deuxième partie prolongeant la première partie en sens direct, la longueur $L_{31}$ étant de préférence telle que :

$$L_{31} < \frac{\pi . D_I}{2N}$$

- un type de profil d'extrémité échancré latéralement en sens rétrograde, comportant une première partie suivant un segment de droite ou de cercle, le segment ayant une longueur $L_{41}$ donnée et étant situé à une distance de l'axe de référence égale à la moitié du diamètre intérieur de référence, et une deuxième partie située à une distance de l'axe de référence strictement supérieur à la moitié du diamètre intérieur de référence, de préférence avec une différence supérieure à 2 mm, et de préférence supérieure à 5 mm la deuxième partie prolongeant la première partie en sens rétrograde, la longueur $L_{41}$ étant telle que :

$$L_{41} < \frac{\pi . D_I}{2N}$$

Les quatre types de doigts, qui correspondent à quatre signes possibles du langage de codage, s'avèrent faciles à distinguer les uns des autres. Tous, excepté le type de doigts courts, permettent aux doigts d'intervenir dans la fonction essentielle du diaphragme d'embrayage, qui est de transmettre un effort axial au plateau de friction.

De préférence, le code identifiant comporte une clef de contrôle. Un algorithme permet ainsi de vérifier avec un taux de confiance élevé, par un algorithme classique de traitement du signal, l'absence d'erreur lors d'une lecture du code identifiant.

Suivant un autre aspect de l'invention, celle-ci a trait à un procédé de reconnaissance d'un diaphragme d'embrayage d'un modèle à identifier appartenant à une gamme de diaphragmes d'embrayage telle que décrite précédemment, le procédé étant tel que :

- l'on place le diaphragme d'embrayage en face d'une caméra et l'on saisit au moins une image de tout ou partie du diaphragme d'embrayage ;

- on identifie dans l'image saisie, par traitement d'image, un code unique correspondant à la séquence spécifique des profils d'extrémité des différents types du diaphragme d'embrayage ; et

- on compare le code identifié à un ou plusieurs codes mémorisés.

Suivant un autre aspect de l'invention, celle-ci a trait à un procédé de sélection d'un diaphragme d'embrayage d'un modèle prédéterminé appartenant à une gamme de diaphragmes d'embrayage telle que décrite précédemment, le procédé étant tel que :

- l'on positionne le diaphragme d'embrayage en face d'un gabarit de détrompage ;

- on sélectionne le diaphragme d'embrayage si le diaphragme d'embrayage s'insère sur le gabarit de détrompage, et on le rejette sinon.

Le gabarit de détrompage pourra par exemple consister en une palette d'assemblage pourvue de tiges de détrompage.

Suivant un autre aspect de l'invention, celle-ci a trait à un procédé de fabrication d'une gamme de diaphragmes d'embrayage telle que décrite précédemment, procédé qui comporte une étape commune à tous les modèles de diaphragmes d'embrayage de la gamme, de formage d'une pièce métallique semi-finie, par découpe et formage d'une tôle dans une presse, suivie d'une ou plusieurs étapes de différentiation, incluant notamment le formage des extrémités libres des doigts.

**BREVE DESCRIPTION DES FIGURES**

D'autres caractéristiques et avantages de l'invention ressortiront à la lecture de la description qui suit, en référence aux figures annexées, qui illustrent :

- la figure 1, une vue de face d'un mécanisme d'embrayage à friction, comportant un diaphragme d'embrayage d'une gamme de diaphragmes d'embrayage selon un premier mode de réalisation de l'invention ;

- la figure 2, une vue en coupe axiale du mécanisme d'embrayage à friction de la figure 1 ;

- les figures 3A à 3G, différents modèles de diaphragmes de la gamme de diaphragmes selon le premier mode de réalisation de l'invention ;

- les figures 4A, 4B et 4C sont des détails des figures 3A, 3C et 3G, respectivement ;

- la figure 5, une vue de face d'un mécanisme d'embrayage à friction comportant un diaphragme d'embrayage d'une gamme de diaphragmes d'embrayage selon un deuxième mode de réalisation de l'invention ;

- la figure 6, une vue en coupe axiale du mécanisme d'embrayage à friction de la figure 5 ;

- les figures 7A à 7G, différents modèles de diaphragmes de la gamme de diaphragmes selon le deuxième mode de réalisation de l'invention ;

- la figure 8, un diaphragme d'embrayage d'un modèle d'une gamme de diaphragmes d'embrayage selon un troisième mode de réalisation de l'invention.

Pour plus de clarté, les éléments identiques ou similaires sont repérés par des signes de référence identiques sur l'ensemble des figures.

**DESCRIPTION DÉTAILLÉE DE MODES DE REALISATION**

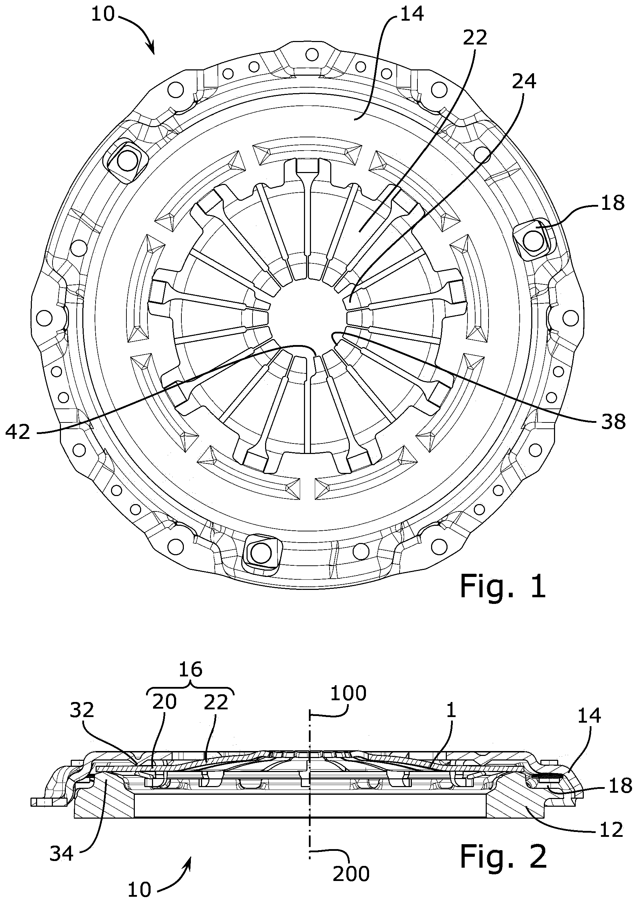

Sur les figures **1** et **2** est illustré un mécanisme d'embrayage à friction **10**, comportant un plateau de pression **12**, un couvercle **14**, et un diaphragme **16** en tôle, intercalé entre le plateau de pression **12** et le couvercle **14**. Le plateau de pression **12** et le couvercle **14** sont liés l'un à l'autre par des languettes élastiques **18**, ici d'orientation circonférentielle, qui assurent un degré de liberté de translation du plateau de pression **12** par rapport au couvercle **14** parallèlement à un axe de référence **100** qui est un axe de révolution du mécanisme d'embrayage, tout en liant le couvercle **14** et le plateau de pression **12** en rotation autour de l'axe de référence **100**.

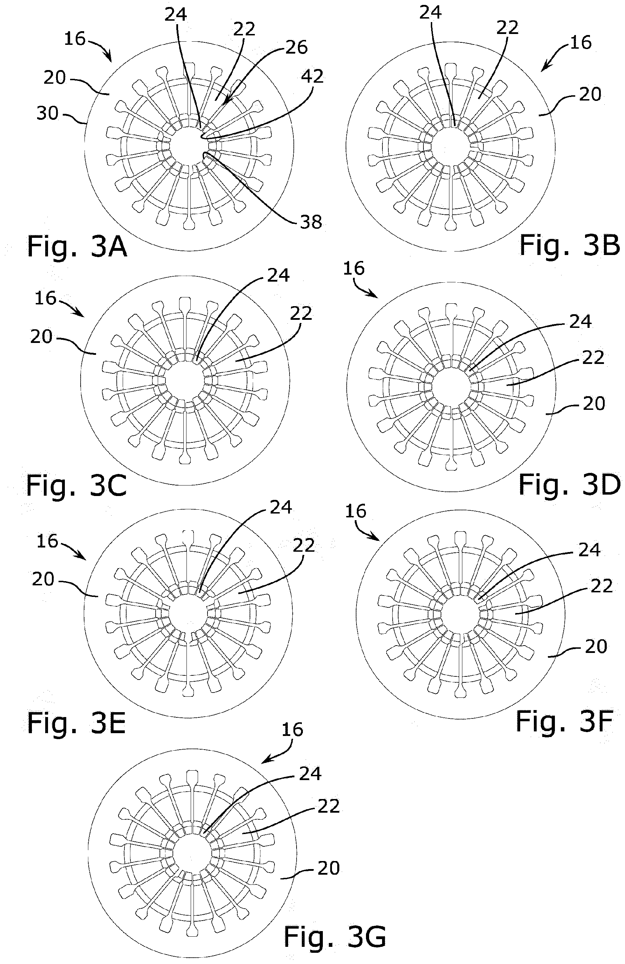

De façon connue en soi, et illustrée sur la figure **3A**, le diaphragme d'embrayage **16** est une tôle monobloc qui comporte une rondelle extérieure **20** ayant fonction de rondelle Belleville, et des doigts **22** s'étendant, depuis la rondelle extérieure **20**, radialement vers l'intérieur et vers l'axe de référence **100** du mécanisme d'embrayage **10**, axe qui est confondu avec un axe de référence **200** du diaphragme d'embrayage **16**. Les doigts **22** présentent une extrémité libre **24** située à distance de l'axe de référence et sont deux à deux séparés par des fentes radiales **26**, qui s'évasent dans la zone de raccordement entre les doigts **22** avec la rondelle **20**. On notera N le nombre de doigts. Ce nombre est ici égal à **18**, mais ce nombre peut être différent dans d'autres configurations.

Le contour extérieur **30** du diaphragme d'embrayage **16** est circulaire. La périphérie intérieure de la rondelle extérieure **20** prend appui sur un bossage **32** formé sur le couvercle **14** alors que la périphérie extérieure de la rondelle **20** vient en appui sur une portée **34** formée sur le plateau de pression **12**.

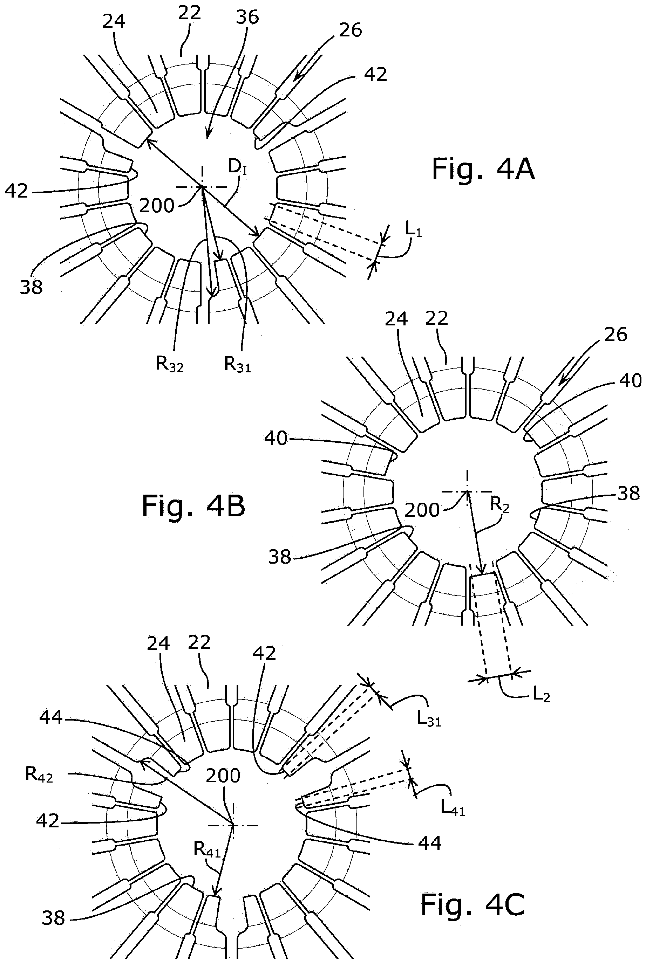

Comme illustré sur la figure **4A**, les extrémités libres **24** des doigts **22** du diaphragme d'embrayage **16** délimitent une ouverture **36** sensiblement circulaire centrée sur l'axe de référence **200** et ayant un diamètre, dit dans la suite diamètre intérieur de référence et noté $D_I$, permettant le passage d'un ou plusieurs arbres d'entrée d'une boîte de transmission. De façon en soi connue, une butée d'embrayage tournante, non représentée sur les figures, vient en appui axial contre les extrémités libres **24** des doigts **22** du diaphragme **16,** pour manœuvrer le mécanisme d'embrayage **10.**

On a illustré sur les figures **3B** à **3G** des diaphragmes d'embrayage **16** qui appartiennent à des modèles différents de la même gamme de diaphragmes d'embrayage que le modèle de la figure **3A.** Ces différents modèles de diaphragmes sont destinés à des mécanismes d'embrayage de modèles différents et ne sont pas interchangeables. Ils présentent toutefois certaines caractéristiques dimensionnelles communes, par exemple les dimensions du pourtour extérieur du diaphragme **16,** qui est ici circulaire et a le même diamètre pour tous les modèles de la gamme, le nombre de doigts **22,** la forme de la base des doigts à proximité de la rondelle extérieure. Ces similitudes tiennent au fait que les différents modèles de la gamme ont des étapes communes de fabrication, par exemple les étapes de découpe et de formage de la rondelle et de la base des doigts.

Les modèles peuvent se distinguer par l'épaisseur $E_p$ de la tôle, son matériau constitutif, ou des caractéristiques géométriques non facilement détectables.

Pour faciliter l'identification des différents modèles, on introduit un codage en utilisant différents types de profil au niveau des extrémités libres **24** des doigts. Ainsi, on distingue sur les figures **3A** à **3G** et les détails des figures **4A** à **4C** quatre types de profil : un profil d'extrémité dit de type long **38,** un profil d'extrémité dit de type court **40,** un profil d'extrémité de type dit échancré latéralement en sens direct **42,** et un profil d'extrémité de type dit échancré latéralement en sens rétrograde **44.**

Le type de profil d'extrémité long se caractérise, par un segment de droite ou de cercle centré sur l'axe de référence, situé à une distance de l'axe de référence égale à la moitié du diamètre intérieur de référence $D_I$. Ce segment s'étendant sans interruption et sans échancrure d'une fente latérale à l'autre et a une longueur $L_1$ telle que :

$$\frac{\pi.D_I}{2N} < L_1 < \frac{\pi.D_I}{N}$$

De préférence :

$$\frac{2\pi.D_I}{3N} < L_1 < \frac{\pi.D_I}{N}$$

Ces inéquations ne tiennent pas compte de l'espace interstitiel $E_I$ nécessaire entre deux doigts adjacents, qui est généralement supérieur à 1 mm. En pratique, on a donc de préférence :

$$L_1 < \left(\frac{\pi.D_I}{N} - 1mm\right)$$

De préférence, l'espace interstitiel $E_I$, nécessaire entre deux doigts adjacents est inférieur à l'épaisseur $E_p$ de la tôle, et l'on peut, suivant un mode particulier, prévoir que :

$$\left(\frac{\pi.D_I}{N} - E_p\right) < L_1$$

Le type de profil d'extrémité court se caractérise par un segment de droite ou de cercle centré sur l'axe de référence, situé à une distance $R_2$ de l'axe de référence strictement supérieure à la moitié du diamètre intérieur de référence $D_I$. De préférence :

$$R_2 \geq \frac{D_I}{2} + 2mm$$

De préférence et notamment pour les diaphragmes de grand diamètre extérieur, on peut prévoir :

$$R_2 \geq \frac{D_I}{2} + 5mm$$

Ce segment a une longueur $L_2$ telle que :

$$\frac{\pi.R_2}{2N} < L_2 < \frac{\pi.R_2}{N}$$

De préférence :

$$\frac{2\pi.R_2}{3N} < L_2 < \frac{\pi.R_2}{N}$$

Le type de profil d'extrémité échancré visible sur la figure **4A** latéralement en sens direct, se caractérise par une première partie située à une distance $R_{31}$ de l'axe de référence égale à la moitié du diamètre intérieur de référence $D_I$ et qui s'étend en direction orthoradiale en formant un segment de droite ou de cercle, et une deuxième partie située à une distance $R_{32}$ de l'axe de référence strictement supérieur à la moitié du diamètre intérieur de référence $D_I$, la deuxième partie prolongeant la première partie en sens direct ;

De préférence, le segment de la première partie a une longueur $L_{31}$ telle que :

$$L_{31} < \frac{\pi.D_I}{2N}$$

En pratique, et pour éviter de fragiliser le doigt, on prévoit que :

$$3mm \leq L_{31}$$

De préférence, le rayon $R_{32}$ est tel que :

$$R_{32} \geq \frac{D_I}{2} + 2mm$$

De préférence, et notamment pour les diaphragmes de grand diamètre extérieur,

$$R_{32} \geq \frac{D_I}{2} + 5mm$$

Le type de profil d'extrémité échancré latéralement en sens rétrograde, se caractérise par une première partie située à une distance $R_{41}$ de l'axe de référence égale à la moitié du diamètre intérieur de référence $D_I$ et qui s'étend en direction orthoradiale en formant un segment de droite ou de cercle, et une deuxième partie située à une distance $R_{42}$ de l'axe de référence strictement supérieur à la moitié du diamètre intérieur de référence $D_I$, la deuxième partie prolongeant la première partie en sens rétrograde ;

De préférence, le segment de la première partie a une longueur $L_{41}$ telle que :

$$L_{41} < \frac{\pi . D_I}{2N}$$

De préférence, le rayon $R_{42}$ est tel que :

$$R_{42} \geq \frac{D_I}{2} + 2mm$$

De préférence, et notamment pour les diaphragmes de grand diamètre extérieur, le rayon $R_{42}$ est tel que :

$$R_{42} \geq \frac{D_I}{2} + 5mm$$

En pratique, on a de préférence :

$$\begin{cases} R_1 = R_{31} = R_{41} = \dfrac{D_I}{2} \\ \\ R_2 = R_{32} = R_{42} \end{cases}$$

En notant arbitrairement « 1 » le profil long, « 2 » le profil court, « 3 » le profil échancré en sens direct et « 4 » le profil échancré en sens rétrograde, on obtient:

- pour le diaphragme des figures **3A** et **4A,** la séquence 113111113111113111

- pour le diaphragme de la figure **3B,** la séquence 111131113111111111

- pour le diaphragme des figures **3C** et **4B,** la séquence 112111112111112111

- pour le diaphragme de la figure **3D,** la séquence 111111112111111111

- pour le diaphragme des figures **3E** et **4C,** la séquence 113411113411113411

- pour le diaphragme de la figure **3F,** la séquence 111411113111111111

- pour le diaphragme de la figure **3G,** la séquence 111111112131111111

Dans la mesure où il n'existe pas de moyens d'indexation angulaire du diaphragme **16** autour de l'axe de référence **200,** chaque modèle de diaphragme livre non pas une, mais dix-huit séquences possibles qui se déduisent les unes des autres par permutation circulaire. Mais les séquences pour chaque modèle sont bien spécifiques à ce modèle, c'est-à-dire différentes des séquences des autres modèles d'une même gamme.

Il est donc possible d'identifier un modèle de diaphragme de la gamme par acquisition d'une image du diaphragme et traitement d'image visant à reconnaître la séquence des profils d'extrémité des doigts.

Il est également possible de vérifier qu'un diaphragme donné de la gamme est bien d'un modèle recherché, en plaçant le diaphragme sur un gabarit correspondant au modèle, qui ne peut s'insérer dans l'ouverture centrale du diaphragme que si celui-ci est du modèle recherché.

Comme illustré sur la figure **1,** il est également possible d'identifier le modèle de diaphragme sur le mécanisme assemblé, dans la mesure où les extrémités libres **24** des doigts **22** du diaphragme **16** ne sont pas recouvertes par le couvercle **14.** On peut donc notamment faire des contrôles a posteriori en comparant par exemple le modèle de diaphragme au modèle de couvercle, identifié par d'autres moyens.

Le codage des différents modèles peut prévoir une redondance, par exemple une reproduction d'une portion de séquence trois fois par tour, comme illustré sur les figures **3A , 3C** et **3E.** On peut également prévoir un codage incluant une clef de contrôle, de façon connue, par exemple une somme de contrôle codée sur le dernier ou les deux éléments de la séquence.

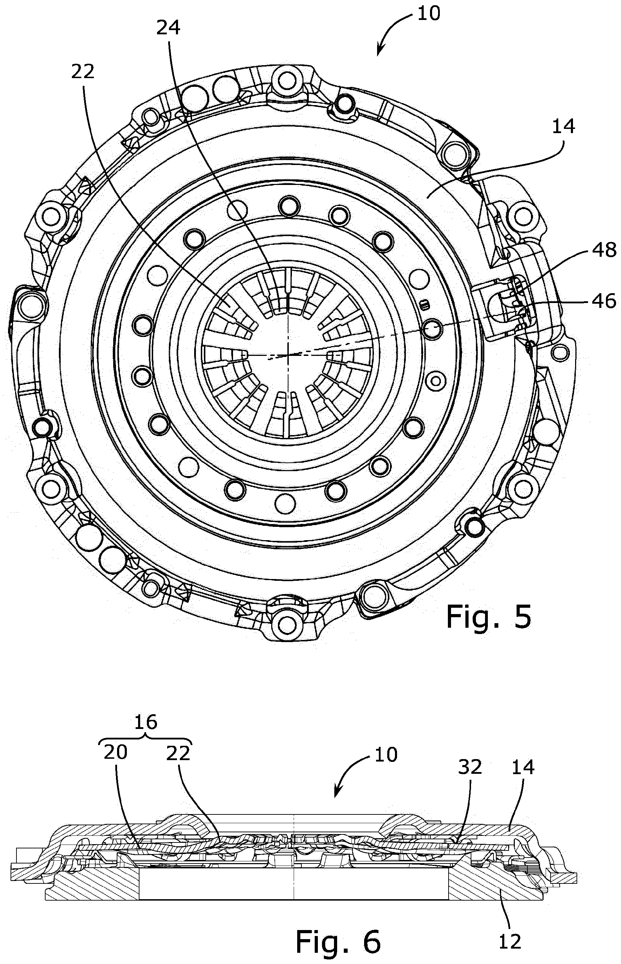

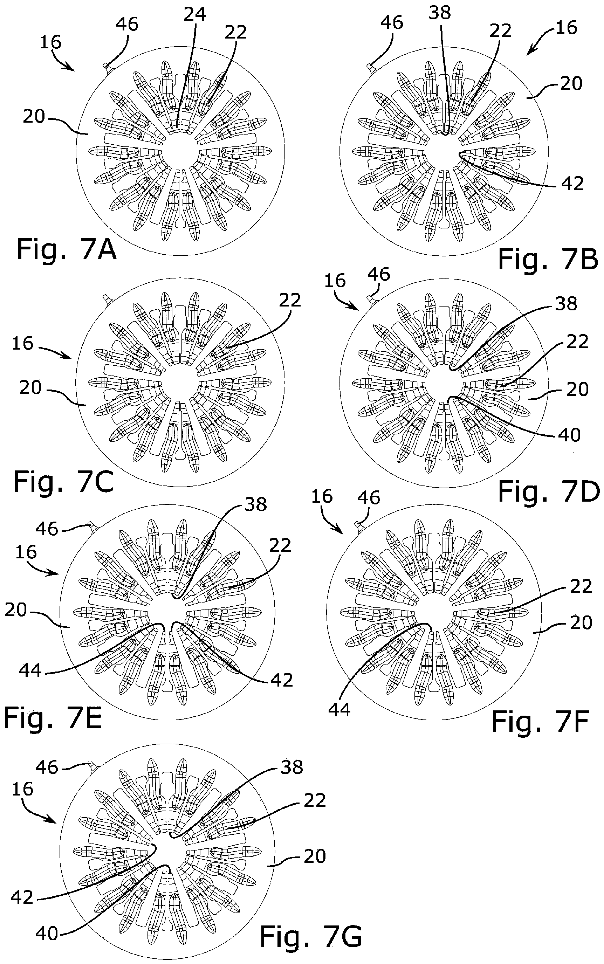

Sur les figures **5** et **6** est illustré un mécanisme d'embrayage **10** comportant un diaphragme appartenant une gamme de diaphragmes d'embrayage suivant un deuxième mode de réalisation de l'invention. Le diaphragme du mécanisme d'embrayage des figures **5** et **6** est illustré sur la figure **7A.** Sur les figures **7B** à **7G** sont illustrés des diaphragmes de modèles différents de la même gamme. Ces différents modèles de diaphragmes sont destinés à des mécanismes d'embrayage de modèles différents et ne sont pas interchangeables. Ils présentent toutefois certaines caractéristiques dimensionnelles communes, par exemple les dimensions et la forme du pourtour extérieur **30** du diaphragme **16,** le nombre de doigts **22** ou la forme de la base des doigts **22** à proximité de la rondelle extérieure **20.** Le périmètre extérieur **30** des diaphragmes d'embrayage **16** de la gamme est ici partiellement circulaire et présente un lobe **46** qui fait saillie radialement vers l'extérieur. La fonction première du lobe **46** est de servir de point d'appui pour un actionneur de rattrapage d'usure des garnitures du disque de l'embrayage actionné par le diaphragme, comme illustré par exemple dans le document FR 2 847 626 A1. Comme précédemment les similitudes entre les différents modèles de la gamme correspondent à des étapes communes de fabrication, par exemple les étapes de découpe et de formage de la rondelle **20** et de la base des doigts **22.**

Pour faciliter l'identification des différents modèles, on introduit un codage en utilisant différents types de profil au niveau des extrémités libres des doigts. De manière similaire au premier mode de réalisation, on reconnaît sur les figures **7A** à **7G** quatre types de profil : un profil d'extrémité dit de type long 38, un profil d'extrémité dit de type court **40,** un profil d'extrémité de type dit échancré latéralement en sens direct **42,** et un profil d'extrémité de type dit échancré latéralement en sens rétrograde **44.**

À la différence du premier mode de réalisation, on dispose avec le lobe **46** d'une singularité qui permet de définir une origine pour un référentiel de lecture des codes, de sorte que chaque modèle de diaphragme livre une séquence et une seule par modèle, séquence qui est choisie différente des séquences des autres modèles. Le nombre de séquences différentes est donc ici N fois plus important que dans le premier mode de réalisation.

Notons qu'il existe dans le couvercle **14** une fenêtre **48** permettant de visualiser le lobe **46.** L'information concernant l'indexation angulaire du diaphragme d'embrayage **16** n'est donc pas perdue une fois que le mécanisme d'embrayage **10** est monté.

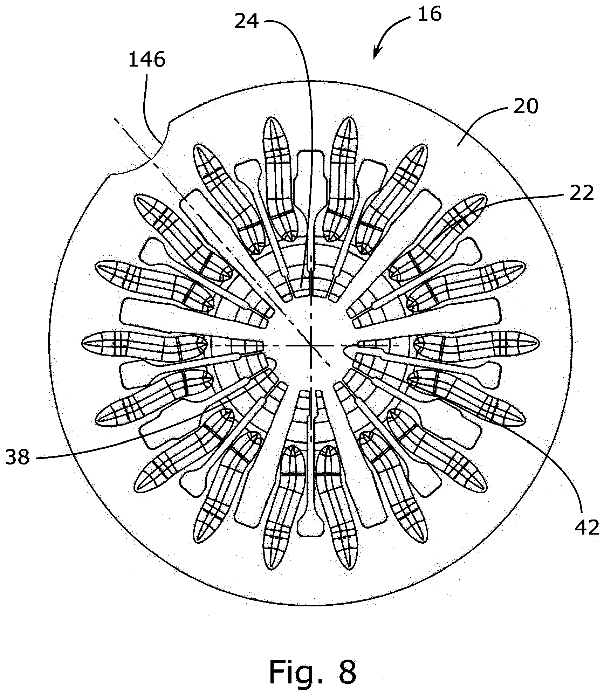

On a illustré sur la figure **8** un diaphragme d'une gamme de diaphragmes d'embrayage suivant un troisième mode de réalisation de l'invention. Les diaphragmes de cette gamme se distinguent de ceux de la gamme selon le deuxième mode de réalisation par la présence, sur le pourtour extérieur **30** du diaphragme **16,** d'une encoche **146** en lieu et place du lobe **46** du deuxième mode de réalisation. Cette encoche a pour fonction première de permettre le passage d'un organe de rattrapage d'usure des garnitures du disque de l'embrayage actionné par le diaphragme, comme décrit par exemple dans le document DE 10 2011 086 995 A1. Cette encoche **146** peut également être utilisée comme singularité permettant une indexation angulaire du diaphragme **16** pour la reconnaissance du code constitué par la séquence spécifique des pourtours de différents types des extrémités **24** des doigts **22.**

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

**Revendications**

1. Gamme de diaphragmes d'embrayage (16), chacun des diaphragmes d'embrayage (16) de la gamme étant constitué d'une pièce métallique formant une rondelle extérieure (20) définissant un axe de référence (200), et des doigts (22) faisant saillie depuis la rondelle extérieure (20) radialement vers l'axe de référence (200), chacun des doigts (22) présentant une extrémité libre (24) située à distance de l'axe de référence (200), l'extrémité libre (24) de chacun des doigts (22) ayant un profil d'extrémité (38, 40, 42, 44) d'un type donné parmi plusieurs types différents, chacun des types différant de chacun des autres types de manière reconnaissable depuis un point d'observation donné situé à l'infini sur l'axe de référence, **caractérisée en ce que** la gamme de diaphragmes d'embrayage (16) comporte plusieurs modèles de diaphragmes d'embrayage, les diaphragmes d'embrayage (16) d'un même modèle donné quelconque parmi les modèles étant identiques, et les diaphragmes d'embrayage (16) d'un même modèle donné quelconque parmi les modèles se distinguant des diaphragmes d'embrayage (16) des autres modèles par une séquence spécifique des profils d'extrémités (38, 40, 42, 44) des différents types, la séquence spécifique constituant un code identifiant du modèle donné.

2. Gamme de diaphragmes d'embrayage (16) selon la revendication 1, **caractérisé en ce que** les diaphragmes d'embrayage (16) de la gamme de diaphragmes d'embrayage (16) ont un contour extérieur (30) identique.

3. Gamme de diaphragmes d'embrayage selon la revendication 2, **caractérisée en ce que** le contour extérieur (30) comporte au moins une singularité d'indexation angulaire (46, 146) visible depuis le point d'observation donné, les diaphragmes d'embrayage (16) d'un même modèle parmi les modèles distincts différant des diaphragmes d'embrayage des autres modèles par une séquence spécifique des profils d'extrémité (38, 40, 42, 44) des différents types, par rapport à un référentiel défini par la singularité d'indexation angulaire (46, 146).

4. Gamme de diaphragmes d'embrayage selon l'une quelconque des revendications précédentes, **caractérisée en ce que** la séquence spécifique des profils d'extrémité (38, 40, 42, 44) des différents types des diaphragmes d'embrayage (16) d'un modèle donné quelconque parmi les différents modèles diffère de la séquence des profils d'extrémité (38, 40, 42, 44) des différents types des autres modèles indépendamment de l'orientation angulaire autour de l'axe de référence (200).

5. Gamme de diaphragmes d'embrayage selon l'une quelconque des revendications précédentes, **caractérisée en ce que** les différents types incluent au moins trois types différents, et de préférence au moins quatre types différents.

6. Gamme de diaphragmes d'embrayage selon l'une quelconque des revendications précédentes, **caractérisée en ce que** les différents types incluent au plus six types différents, et de préférence au plus quatre types différents.

7. Gamme de diaphragmes d'embrayage selon l'une quelconque des revendications précédentes, **caractérisée en ce que** les diaphragmes d'embrayage (16) de la gamme ont un nombre N identique de doigts (22).

8. Gamme de diaphragmes d'embrayage selon l'une quelconque des revendications précédentes, **caractérisée en ce que** les diaphragmes d'embrayage (16) de la gamme ont un diamètre intérieur de référence $D_I$ identique non nul, le diamètre intérieur de référence $D_I$ d'un diaphragme d'embrayage donné (16) de la gamme étant le diamètre du plus grand cylindre aligné sur l'axe de référence (200) du diaphragme d'embrayage donné (16) et en contact avec l'extrémité libre (24) d'au moins un des doigts (22) du diaphragme d'embrayage donné (16).

9. Gamme de diaphragmes d'embrayage selon la revendication 8, **caractérisée en ce que** les différents types de profil d'extrémité (38, 40, 42, 44) comportent au moins deux types, et de préférence au moins trois types de profil d'extrémité (38, 40, 42, 44), et de préférence quatre types de profil d'extrémité (38, 40, 42, 44) parmi les types suivants :

   - un type de profil d'extrémité long (38), formant un segment de droite ou de cercle, le segment étant situé à une distance de l'axe de référence égale à la moitié du diamètre intérieur de référence et ayant une longueur $L_1$ donnée telle que :

$$\frac{\pi . D_I}{2N} < L_1$$

et de préférence telle que :

$$\frac{\pi . D_I}{3N} < L_1$$

   - un type de profil d'extrémité court (40), situé à une distance de l'axe de référence strictement supérieur à la moitié du diamètre intérieur de référence, de préférence avec une différence supérieure à 2 mm, de préférence avec une différence supérieure à 5 mm;
   - un type de profil d'extrémité échancré latéralement en sens direct (42), comportant une première partie suivant un segment de droite ou de cercle, le segment ayant une longueur $L_{31}$ donnée et étant situé à une distance de l'axe de référence égale à la moitié du diamètre intérieur de référence, et une deuxième partie située à une distance de l'axe de référence strictement supérieur à la moitié du diamètre intérieur de référence, de préférence avec une différence supérieure à 2 mm, la deuxième partie prolongeant la première partie en sens direct, la longueur $L_{31}$ étant de préférence telle que :

$$L_{31} < \frac{\pi . D_I}{2N}$$

   - un type de profil d'extrémité échancré latéralement en sens rétrograde (44), comportant une première partie suivant un segment de droite ou de cercle, le segment ayant une longueur $L_{41}$ donnée et étant situé à une distance de l'axe de référence égale à la moitié du diamètre intérieur de référence, et une deuxième partie située à une distance de l'axe de référence strictement supérieur à la moitié du diamètre intérieur de référence, de préférence avec une différence supérieure à 2 mm, et de préférence supérieure à 5 mm la deuxième partie prolongeant la première partie en sens rétrograde, la longueur $L_{41}$ étant telle que :

$$L_{41} < \frac{\pi . D_I}{2N}$$

10. Gamme de diaphragmes d'embrayage selon l'une quelconque des revendications précédentes, **caractérisée en ce que** le code identifiant comporte une clef de contrôle.

11. Procédé de reconnaissance d'un diaphragme d'embrayage (16) d'un modèle à identifier appartenant à une gamme de diaphragmes d'embrayage selon l'une quelconque des revendications précédentes, **caractérisé en ce que** :

    - l'on place le diaphragme d'embrayage (16) en face d'une caméra et l'on saisit au moins une image de tout ou partie du diaphragme d'embrayage (16) ;
    - on identifie dans l'image saisie, par traitement d'image, un code unique correspondant à la séquence spécifique des profils d'extrémité (38, 40, 42, 44) des différents types du diaphragme d'embrayage (16) ; et
    - on compare le code identifié à un ou plusieurs codes mémorisés.

12. Procédé de sélection d'un diaphragme d'embrayage (16) d'un modèle prédéterminé appartenant à une gamme de diaphragmes d'embrayage selon l'une quelconque des revendications 1 à 10, **caractérisé en ce que** :

    - l'on positionne le diaphragme d'embrayage (16) en face d'un gabarit de détrompage ;
    - on sélectionne le diaphragme d'embrayage (16) si le diaphragme d'embrayage (16) s'insère sur le gabarit de détrompage, et on le rejette sinon.

13. Procédé de fabrication d'une gamme de diaphragmes d'embrayage selon l'une quelconque des revendications 1 à 10, **caractérisé en ce qu'**il comporte une étape commune à tous les modèles de diaphragmes d'embrayage (16) de la gamme, de formage d'une pièce métallique semi-finie, par découpe et formage d'une tôle dans une presse, suivie d'une ou plusieurs étapes de différentiation, incluant notamment le formage des extrémités libres (24) des doigts (22).

**Patentansprüche**

1. Baureihe von Kupplungsmembranen (16), wobei jede der Kupplungsmembranen (16) der Baureihe aus einem Metallteil gebildet ist, das eine äußere Scheibe (20) ausbildet, die eine Referenzachse (200) definiert, und aus Fingern (22), die von der äußeren Scheibe (20) radial in Richtung der Referenzachse (200) vorstehen, wobei jeder der Finger (22) ein freies Ende (24) aufweist, das von der Referenzachse (200) beabstandet angeordnet ist, wobei das freie Ende (24) jedes der Finger (22) ein Endprofil (38, 40, 42, 44) eines gegebenen Typs unter mehreren unterschiedlichen Typen aufweist, wobei sich jeder der Typen von jedem der anderen Typen in einer Weise unterscheidet, die von einem gegebenen Beobachtungspunkt aus, der sich im Unendlichen auf der Referenzachse befindet, erkennbar ist, **dadurch gekennzeichnet, dass** die Baureihe von Kupplungsmembranen (16) mehrere Modelle von Kupplungsmembranen umfasst, wobei die Kupplungsmembranen (16) eines beliebigen gleichen Modells unter den Modellen identisch sind und wobei sich die Kupplungsmembranen (16) eines beliebigen gleichen Modells unter den Modellen von den Kupplungsmembranen (16) der anderen Modelle durch eine spezifische Abfolge der Endprofile (38, 40, 42, 44) der unterschiedlichen Typen unterscheiden, wobei die spezifische Abfolge einen Identifizierungscode des gegebenen Modells darstellt.

2. Baureihe von Kupplungsmembranen (16) nach Anspruch 1, **dadurch gekennzeichnet, dass** die Kupplungsmembranen (16) der Baureihe von Kupplungsmembranen (16) eine identische Außenkontur (30) aufweisen.

3. Baureihe von Kupplungsmembranen nach Anspruch 2, **dadurch gekennzeichnet, dass** die Außenkontur (30) zumindest eine Winkelindexierungssingularität (46, 146) aufweist, die vom gegebenen Beobachtungspunkt aus sichtbar ist, wobei sich die Kupplungsmembranen (16) eines gleichen Modells unter den unterschiedlichen Modellen von den Kupplungsmembranen der anderen Modelle durch eine spezifische Abfolge der Endprofile (38, 40, 42, 44) der unterschiedlichen Typen in Bezug auf einen durch die Winkelindexierungssingularität (46, 146) definiertes Bezugssystem unterscheiden.

4. Baureihe von Kupplungsmembranen nach einem der vorangehenden Ansprüche, **dadurch gekennzeichnet, dass** sich die spezifische Abfolge der Endprofile (38, 40, 42, 44) der unterschiedlichen Typen von Kupplungsmembranen (16) eines beliebigen gegebenen Modells unter den unterschiedlichen Modellen von der Abfolge der Endprofile (38, 40, 42, 44) der unterschiedlichen Typen der anderen Modelle unabhängig von der Winkelausrichtung um die Referenzachse (200) unterscheidet.

5. Baureihe von Kupplungsmembranen nach einem der vorangehenden Ansprüche, **dadurch gekennzeichnet, dass** die unterschiedlichen Typen zumindest drei unterschiedliche Typen und vorzugsweise zumindest vier unterschiedliche Typen beinhalten.

6. Baureihe von Kupplungsmembranen nach einem der vorangehenden Ansprüche, **dadurch gekennzeichnet, dass** die unterschiedlichen Typen höchstens sechs unterschiedliche Typen und vorzugsweise höchstens vier unterschiedliche Typen beinhalten.

7. Baureihe von Kupplungsmembranen nach einem der vorangehenden Ansprüche, **dadurch gekennzeichnet, dass** die Kupplungsmembranen (16) der Baureihe eine identische Anzahl N an Fingern (22) aufweisen.

8. Baureihe von Kupplungsmembranen nach einem der vorangehenden Ansprüche, **dadurch gekennzeichnet, dass** die Kupplungsmembranen (16) der Baureihe einen Referenzinnendurchmesser $D_1$ ungleich Null aufweisen, wobei der Referenzinnendurchmesser $D_1$ einer gegebenen Kupplungsmembran (16) der Baureihe der Durchmesser des größten Zylinders ist, der mit der Referenzachse (200) der gegebenen Kupplungsmembran (16) ausgerichtet ist und mit dem freien Ende (24) zumindest eines der Finger (22) der gegebenen Kupplungsmembran (16) in Kontakt steht.

9. Baureihe von Kupplungsmembranen nach Anspruch 8, **dadurch gekennzeichnet, dass** die unterschiedlichen Typen von Endprofilen (38, 40, 42, 44) zumindest zwei Typen und vorzugsweise zumindest drei Typen von Endprofilen (38, 40, 42, 44) und vorzugsweise vier Typen von Endprofilen (38, 40, 42, 44) unter den folgenden Typen aufweisen:

- einen Typ eines langen Endprofils (38), das ein Linien- oder Kreissegment ausbildet, wobei das Segment in einem Abstand zur Referenzachse angeordnet ist, der der Hälfte des Referenzinnendurchmessers entspricht und eine gegebenen Länge $L_1$ aufweist, sodass:

$$\frac{\pi \cdot D_1}{2N} < L_1$$

und sodass vorzugsweise:

$$\frac{\pi \cdot D_1}{3N} < L_1$$

- einen Typ eines kurzen Endprofils (40), das sich in einem Abstand zur Referenzachse befindet, die strikt größer ist als die Hälfte des Referenzinnendurchmessers, vorzugsweise mit einer Differenz von mehr als 2 mm, vorzugsweise mit einer Differenz von mehr als 5 mm;
- einen Typ eines in direkter Richtung seitlich ausgesparten Endprofils (42) mit einem ersten Teil, der einem Linien- oder Kreissegment folgt, wobei das Segment eine gegebene Länge $L_{31}$ aufweist und in einem Abstand zur Referenzachse angeordnet ist, der der Hälfte des Referenzinnendurchmessers entspricht, und einem zweiten Teil, der in einem Abstand zur Referenzachse angeordnet ist, der strikt größer ist als die Hälfte des Referenzinnendurchmessers, vorzugsweise mit einer Differenz von mehr als 2 mm, wobei der zweite Teil den ersten Teil in direkter Richtung verlängert, wobei die Länge $L_{31}$ vorzugsweise so ist, dass:

$$L_{31} < \frac{\pi \cdot D_1}{2N}$$

- einen Typ eines in retrograder Richtung seitlich ausgesparten Endprofils (44) mit einem ersten Teil, der einem Linien- oder Kreissegment folgt, wobei das Segment eine gegebene Länge $L_{41}$ aufweist und in einem Abstand zur Referenzachse angeordnet ist, die der Hälfte des Referenzinnendurchmessers entspricht, und einem zweiten Teil, der in einem Abstand zur Referenzachse angeordnet ist, der strikt größer ist als die Hälfte des Referenzinnendurchmessers, vorzugsweise mit einer Differenz von mehr als 2 mm und vorzugsweise mehr als 5 mm, wobei der zweite Teil den ersten Teil in retrograder Richtung verlängert, wobei die Länge $L_{41}$ so ist, dass:

$$L_{41} < \frac{\pi \cdot D_1}{2N}$$

10. Baureihe von Kupplungsmembranen nach einem der vorangehenden Ansprüche, **dadurch gekennzeichnet, dass** der Identifizierungscode einen Kontrollschlüssel aufweist.

11. Verfahren zum Erkennen einer Kupplungsmembran (16) eines zu identifizierenden Modells, das zu einer Baureihe von Kupplungsmembranen nach einem der vorangehenden Ansprüche gehört, **dadurch ge-**

**kennzeichnet, dass**:

- die Kupplungsmembran (16) vor einer Kamera platziert wird und zumindest ein Bild der Kupplungsmembran (16) oder eines Teils davon aufgenommen wird;
- in dem aufgenommenen Bild durch Bildverarbeitung ein eindeutiger Code identifiziert wird, der der spezifischen Abfolge der Endprofile (38, 40, 42, 44) der unterschiedlichen Typen der Kupplungsmembran (16) entspricht; und
- der identifizierte Code mit einem oder mehreren gespeicherten Codes verglichen wird.

12. Verfahren zur Auswahl einer Kupplungsmembran (16) eines vorbestimmten Modells, das zu einer Baureihe von Kupplungsmembranen nach einem der Ansprüche 1 bis 10 gehört, **dadurch gekennzeichnet, dass**:

- die Kupplungsmembran (16) gegenüber einer Verwechslungsschutzschablone positioniert wird;
- die Kupplungsmembran (16) ausgewählt wird, wenn die Kupplungsmembran (16) in die Verwechslungsschutzschablone passt, und andernfalls abgelehnt wird.

13. Verfahren zur Herstellung einer Baureihe von Kupplungsmembranen nach einem der Ansprüche 1 bis 10, **dadurch gekennzeichnet, dass** es einen allen Modellen von Kupplungsmembranen (16) der Baureihe gemeinsamen Schritt des Ausbildens eines halbfertigen Metallteils durch Schneiden und Formen eines Blechs in einer Presse aufweist, gefolgt von mehreren Differenzierungsschritten, einschließlich insbesondere des Ausbildens der freien Enden (24) der Finger (22).

**Claims**

1. A range of clutch diaphragms (16), each of the clutch diaphragms (16) of the range consisting of a metal component forming an outer washer (20) defining a reference axis (200), and of fingers (22) projecting from the outer washer (20) radially toward the reference axis (200), each of the fingers (22) having a free end (24) situated at a distance from the reference axis (200), the free end (24) of each of the fingers (22) having an end profile (38, 40, 42, 44) of a given type from among several different types, each of the types differing from each of the other types in a way that is recognizable from a given viewpoint situated at infinity on the reference axis, **characterized in that** the range of clutch diaphragms (16) comprises several models of clutch diaphragm, the clutch diaphragms (16) of any one same given model from among the models being identical, and the clutch diaphragms (16) from any one same given model from among the models being distinguishable from the clutch diaphragms (16) of the other models by a specific sequence of the end profiles (38, 40, 42, 44) of the different types, the specific sequence constituting an identifying code identifying the given model.

2. The range of clutch diaphragms (16) as claimed in claim 1, **characterized in that** the clutch diaphragms (16) of the range of clutch diaphragms (16) have an identical outer contour (30).

3. The range of clutch diaphragms as claimed in claim 2, **characterized in that** the outer contour (30) comprises at least one angular-indexing differentiating feature (46, 146) visible from the given viewpoint, the clutch diaphragms (16) of the one same model from among the distinct models differing from the clutch diaphragms of the other models by a specific sequence of the end profiles (38, 40, 42, 44) of the different types, with respect to a frame of reference defined by the angular-indexing differentiating feature (46, 146).

4. The range of clutch diaphragms as claimed in any one of the preceding claims, **characterized in that** the specific sequence of the end profiles (38, 40, 42, 44) of the different types of clutch diaphragm (16) of any given model from among the various models differs from the sequence of the end profiles (38, 40, 42, 44) of the different types of the other models independently of the angular orientation about the reference axis (200).

5. The range of clutch diaphragms as claimed in any one of the preceding claims, **characterized in that** the different types include at least three different types, and preferably at least four different types.

6. The range of clutch diaphragms as claimed in any one of the preceding claims, **characterized in that** the different types include at most six different types, and preferably at most four different types.

7. The range of clutch diaphragms as claimed in any one of the preceding claims, **characterized in that** the clutch diaphragms (16) of the range have an identical number N of fingers (22).

8. The range of clutch diaphragms as claimed in any one of the preceding claims, **characterized in that** the clutch diaphragms (16) of the range have an identical non-zero reference inside diameter $D_I$, the reference inside diameter $D_I$ of a given clutch diaphragm (16) of the range being the diameter of the largest cylinder aligned with the reference axis (200) of the given clutch diaphragm (16) and in contact with the free end (24) of at least one of the fingers (22) of the given clutch diaphragm (16).

9. The range of clutch diaphragms as claimed in claim 8, **characterized in that** the different types of end profile (38, 40, 42, 44) comprise at least two types, and preferably at least three types of end profile (38, 40, 42, 44), and preferably four types of end profile (38, 40, 42, 44) from among the following types:

- a long end profile type (38), forming a segment of a straight line or of a circle, the segment being situated at a distance away from the reference axis that is equal to half the reference inside diameter and having a given length $L_1$ such that:

$$\frac{\pi.D_I}{2N} < L_1$$

and preferably such that:

$$\frac{\pi.D_I}{3N} < L_1$$

- a short end profile type (40), situated at a distance away from the reference axis that is strictly greater than half the reference inside diameter, preferably with a difference greater than 2 mm, preferably with a difference greater than 5 mm;
- an end profile type that is notched laterally in the forward direction (42), comprising a first part along a segment of a straight line or of a circle, the segment having a given length $L_{31}$ and being situated at a distance away from the reference axis that is equal to half the reference inside diameter, and a second part situated at a distance away from the reference axis that is strictly greater than half the reference inside diameter, preferably with a difference greater than 2 mm, the second part extending the first part in the forward direction, the length $L_{31}$ preferably being such that:

$$L_{31} < \frac{\pi.D_I}{2N}$$

- an end profile type that is notched laterally in the backward direction (44), comprising a first part along a segment of a straight line or of a circle, the segment having a given length $L_{41}$ and being situated at a distance away from the reference axis that is equal to half the reference inside diameter, and a second part situated at a distance away from the reference axis that is strictly greater than half the reference inside diameter, preferably with a difference greater than 2 mm, and preferably greater than 5 mm, the second part extending the first part in the backward direction, the length $L_{41}$ being such that:

$$L_{41} < \frac{\pi.D_I}{2N}$$

10. The range of clutch diaphragms as claimed in any one of the preceding claims, **characterized in that** the identifying code comprises a test key.

11. A method for recognizing a clutch diaphragm (16) of a model that is to be identified belonging to a range of clutch diaphragms as claimed in any one of the preceding claims, **characterized in that**:

- the clutch diaphragm (16) is positioned facing a camera and at least one image of all or part of the clutch diaphragm (16) is captured;
- image processing is used to identify, within the captured image, a unique code corresponding to the specific sequence of the end profiles (38, 40, 42, 44) of the different types of clutch diaphragm (16); and
- the code identified is compared with one or more codes stored in memory.

12. A method for selecting a clutch diaphragm (16) of a predetermined model belonging to a range of clutch diaphragms as claimed in any one of claims 1 to 10, **characterized in that**:

- the clutch diaphragm (16) is positioned facing a go/no-go gauge;
- the clutch diaphragm (16) is selected if the clutch diaphragm (16) goes onto the go/no-go gauge, and is rejected if it does not.

13. A method of manufacturing a range of clutch diaphragms as claimed in any one of claims 1 to 10, **characterized in that** it comprises a step common to all the models of clutch diaphragm (16) of the range, of forming a semi-finished metal component by cutting and shaping sheet metal in a press, followed by one or more differentiation steps notably including the shaping of the free ends (24) of the fingers (22).

Fig. 1

Fig. 2

Fig. 3A

Fig. 3B

Fig. 3C

Fig. 3D

Fig. 3E

Fig. 3F

Fig. 3G

Fig. 4A

Fig. 4B

Fig. 4C

Fig. 5

Fig. 6

Fig. 7A

Fig. 7B

Fig. 7C

Fig. 7D

Fig. 7E

Fig. 7F

Fig. 7G

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4126216 A
- FR 2847626 A1

- DE 102011086995 A1